# EUROPEAN PATENT APPLICATION

(11) **EP 3 604 859 A1**
(43) Date of publication of application: **05.02.2020**
(21) Application number: 19189678.6
(22) Date of filing: 01.08.2019
(51) Int. Cl.: F16H 25/20

(54) **FLEXIBLE, LINEAR, ELECTRIC ACTUATOR FOR AUTOMOTIVE APPLICATIONS**

(30) Priority: 02.08.2018 IT 201800007766
(71) Applicant: Magneti Marelli S.p.A., 20011 Corbetta (MI) (IT)
(72) Inventor: BARTOLOTTA, Giancarlo, I-20011 Corbetta, MILANO (IT); MUSOLESI, Stefano, I-20011 Corbetta, MILANO (IT); PEZZOTTA, Federico, I-20011 Corbetta, MILANO (IT)
(74) Representative: Mitola, Marco

(57) **Abstract**

Actuator (4) for automotive applications, comprising:
- a main body (8) housing motor means (12), transmission means (16), a control shaft (20), kinematically connected to said motor means (12) by means of said transmission means (16),
- wherein the control shaft (20) extends from a first transmission end (24), connected to the transmission means (16), to a second operating end (28) operatively connected to a user device. The control shaft (20) is controlled in a reciprocating linear motion along an axial direction (Y-Y) by means of said transmission means (16) which transform a rotation movement along a drive axis (X-X) of the motor means (12) into a translation movement of the control shaft (20) along said axial direction (Y-Y); the motor means (12) and the control shaft (20) are oriented so that the drive axis (X-X) and the axial direction (Y-Y) are perpendicular or parallel and spaced apart from each other.

## Description

### FIELD OF APPLICATION

The present invention relates to a linear electric actuator, in particular for automotive applications such as butterfly valves, choke valves for compressor or turbocharger groups, exhaust gas recirculation (EGR) valves, but also an automatic or electro-actuated gear shift selector, an aerodynamic appendage handling device, and the like.

### PRIOR ART

As is known, actuators are used in motor applications to control and choke a flow, typically a mixture of fuel and/or oxidizer, to be fed to an engine, such as in the case of throttle bodies, but also a mixture of combusted gases, such as in the case of EGR valves or compressor or turbocharger groups, an automatic or electro-actuated gear shift selector, an aerodynamic appendix handling device, and so on.

In all the applications described above, in order to ensure the correct operation of the system/device placed downstream of the actuator, the actuator drive kinematics must be extremely precise, reliable and controllable. In addition, manufacturers in the automotive sector increasingly demand a strict limitation of the dimensions of the components, obviously with the same reliability as traditional actuator systems.

In addition, versatility of the actuators is increasingly required since, depending on the specific applications, variations and/or customisations may be required in terms of driving strokes that may vary both in absolute value and in terms of driving direction, even in an asymmetrical manner, namely, by envisaging a different maximum outward stroke, in terms of displacement, from the maximum return stroke.

Obviously, the market requires technical solutions that can meet these needs, while maintaining extremely low costs.

The known solutions are unable to guarantee the aforementioned specifications/needs.

### PRESENTATION OF THE INVENTION

The need is therefore felt to resolve the drawbacks and limitations mentioned with reference to the prior art.

As a result, the need is felt to provide an actuator that is reliable and economical, versatile, adaptable to the specific needs of the user and that also has reduced dimensions.

Such need is satisfied by an actuator according to claim 1.

### DESCRIPTION OF THE DRAWINGS

Further characteristics and advantages of the present invention will be more clearly comprehensible from the description given below of its preferred and non-limiting embodiments, wherein:

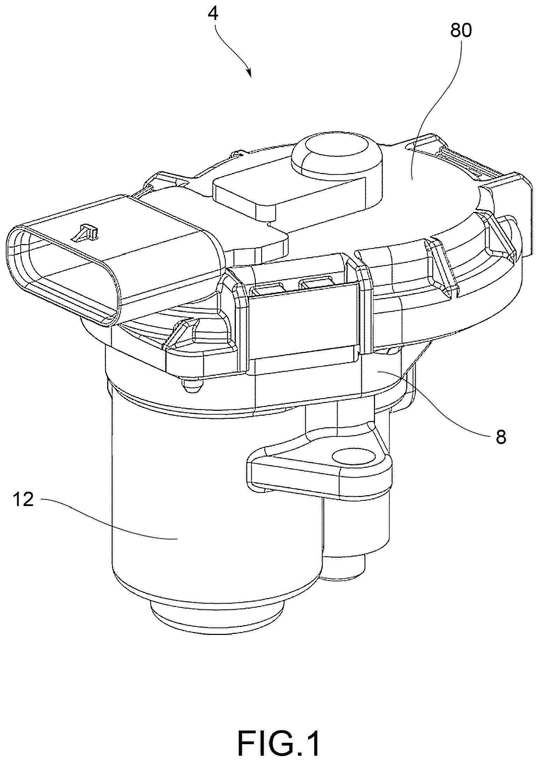

- figure 1 shows a perspective view of an actuator according to one embodiment of the present invention;

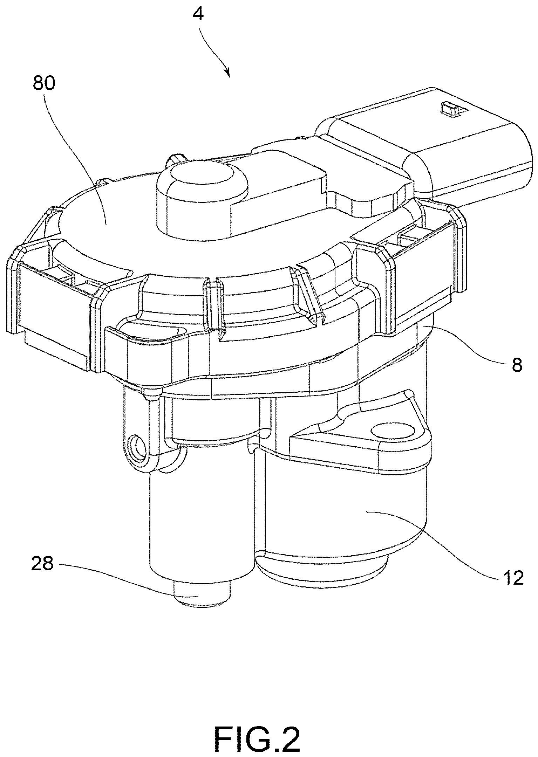

- figure 2 shows a perspective view of the actuator in figure 1, from a different angle;

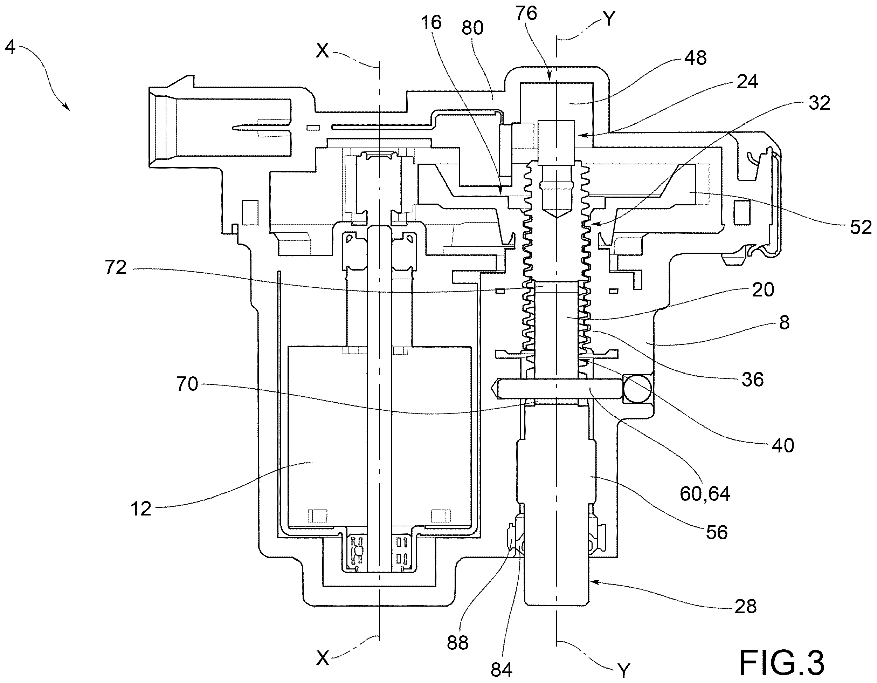

- figure 3 shows a perspective view of the actuator in figure 2, in partial transparency, to allow viewing of the internal components;

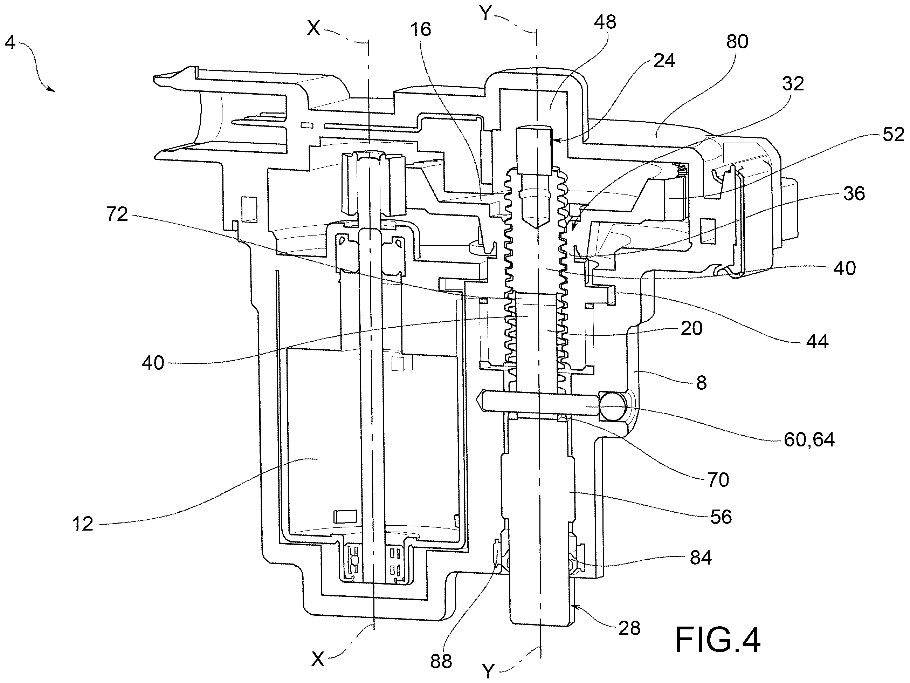

- figure 4 shows a perspective view in cross-section of the actuator in figure 2;

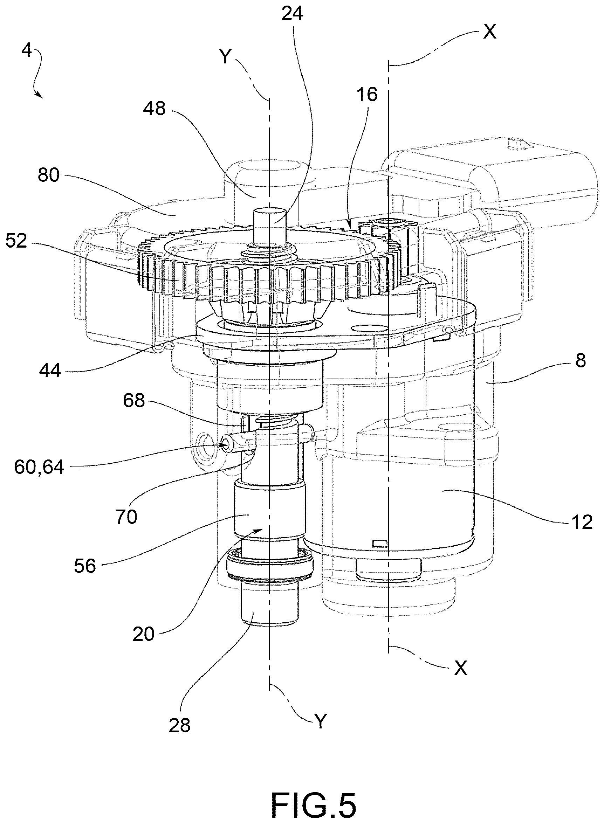

- figure 5 shows a two-dimensional, cross-section view of the actuator in figure 2;

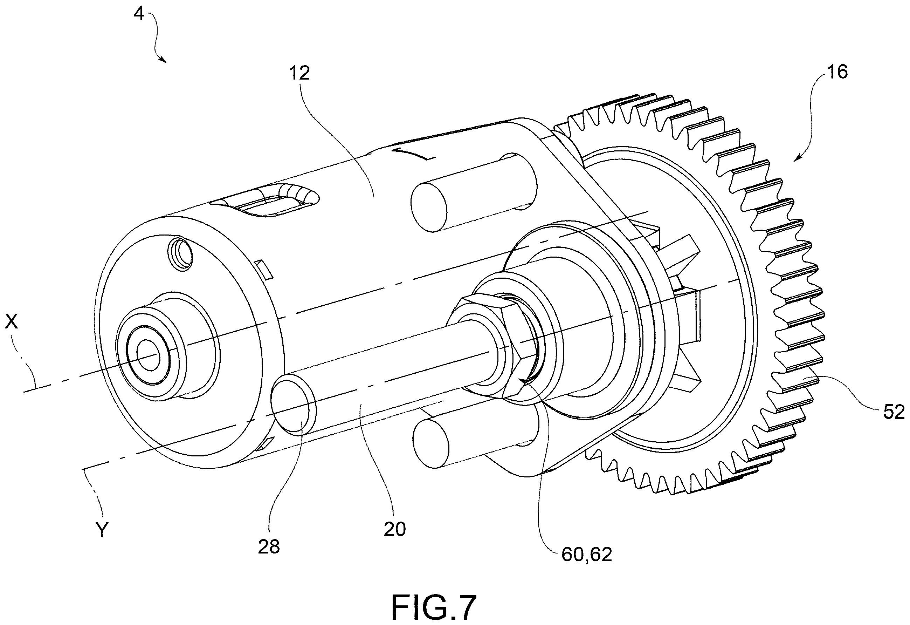

- figures 6-7 show perspective views of an actuator according to two possible embodiment variants of the present invention;
- figures 8-9 show perspective views of the actuator in figure 7, in the two, respective, end stop configurations;
- figures 10-11 show perspective views, in partial cross-section, of an actuator according to the present invention in the two, end stop configurations;

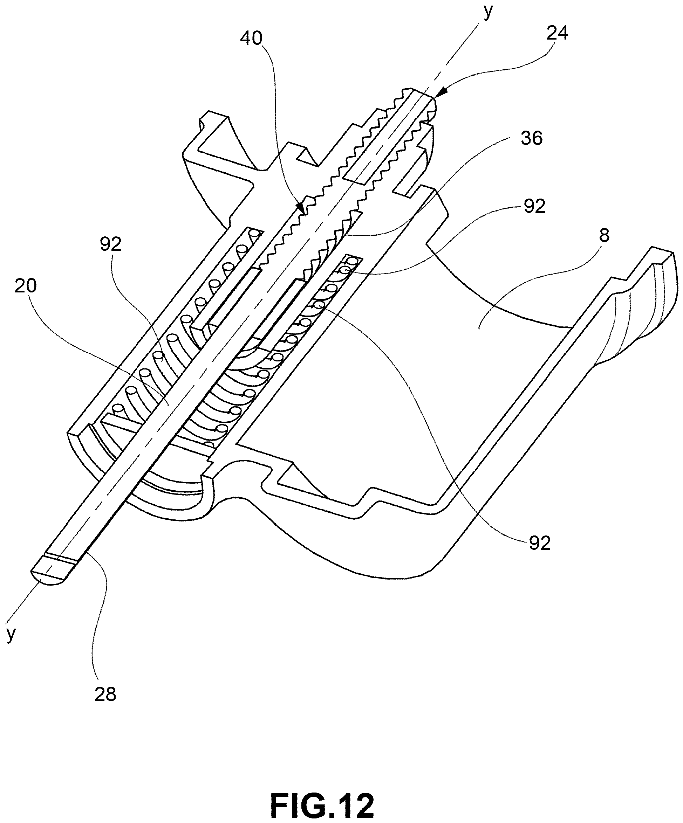

- figure 12 shows a partial perspective sectional view of an actuator according to a further possible embodiment of the present invention.

The elements or parts of elements common to the embodiments described below will be indicated using the same reference numerals.

### DETAILED DESCRIPTION

With reference to the aforementioned figures, reference numeral 4 globally denotes a schematic overall view of an actuator for automotive applications according to the present invention.

As mentioned, this may be an actuator suitable for supplying a mixture of fuel and/or oxidizer, such as petrol, diesel, LPG, methane, hydrogen, suitable for mounting on internal combustion engines, fuel cells and the like; it may also be an actuator such as an exhaust gas recirculation valve (EGR), a choke valve for compressor or turbocharger groups, but even an automatic or electro-actuated gear shift selector, an aerodynamic appendix handling device and the like.

For the purposes of the present invention, the aforementioned applications should be considered in an explanatory and non-exhaustive manner.

The actuator 4 comprises a main body 8 housing motor means 12, transmission means 16, a control shaft 20, kinematically connected to said motor means 12 by means of said transmission means 16.

The motor means 12 typically comprise a DC electric motor that provides the driving torque needed for operation of the actuator 4.

Obviously, it is also possible to use an AC electric motor.

The control shaft 20 extends from a first transmission end 24, connected to the transmission means 16, to a second operating end 28 operatively connected to a butterfly valve or actuator means.

In particular, the first transmission end 24 is connected to the transmission means 16 so that the driving torque of the motor means 12 can be received via the same.

The second operating end 28 of the drive shaft 20 is suitable to be connected to any actuator means, either directly or via further pulleys or kinematic mechanisms, according to the specific applications envisaged.

Preferably the control shaft 20 is directly supported by the main body 8. Preferably, all the supports and / or bearings of the control shaft 20 are arranged on the same main body 8. This arrangement ensures greater rigidity of the support and also an ease in the assembly / disassembly of the component.

According to a possible embodiment, the control shaft 20 comprises two abutments made integral with one another, for example by welding, for example by friction, or by crimping and similar mechanical connection means. The purpose of this differentiation is to use two dies or parts in different materials that can perform different functions at best; for example, a first abutment can be made of softer steel to interface, for example, with the balls of a ball-bearing transmission mechanism, while a second abutment can be used to withstand considerable thermal and mechanical stress, for example because it is covered by hot and corrosive exhaust gases

The control shaft 20 is controlled in a reciprocating linear movement along an axial direction Y-Y by means of transmission means 16 which transform a rotation movement along a drive axis X-X of the motor means 12 into a translation movement of the control shaft 20 along said axial direction Y-Y.

Thus, the rotational movement of the motor means 12 about the drive axis X-X is transformed into a translatory movement of the control shaft 20 along the axial direction Y-Y.

The motor means 12 and the control shaft 20 are oriented so that the drive axis X-X and the axial direction Y-Y are perpendicular or parallel and spaced apart from each other.

In other words, it is possible to envisage that the motor means 12 are substantially perpendicular to the axial direction Y-Y: in such a perpendicular configuration, the drive axis X-X and the axial direction Y-Y need not necessarily be incidental to each other but may also be respectively at an angle.

In the parallel configuration, in which the axial direction Y-Y and the drive axis X-X are parallel to each other, such axes/directions must not instead coincide, i.e. be coaxial with each other, but must be parallel and mutually spaced apart.

According to a possible embodiment, the transmission means 16 comprise a screw-nut type coupling 32, wherein the nut 36 is moved in rotation by the motor means 12 and the screw 40 is made in one piece with or applied to the first transmission end 24 so as to be able to move the control shaft 20 relative to the nut 36.

Preferably, the screw-nut type coupling 32 is of the reversible type. Moreover, said screw-nut screw coupling is provided with at least one elastic means 92 in order to help overcome frictions even in the absence, for example, of ball-bearing screws. The system can also provide for the use of a plurality of springs 92, for example of the axial and / or torsion type, so as to facilitate the overcoming of said frictions. Preferably, said at least one spring 92 is arranged at the outlet stage, i.e. near the second operating end 28.

According to one embodiment, the nut 36 is supported by a bearing 44, preferably a dual effect bearing that provides support for axial loads, parallel to said axial direction Y-Y and radial loads, perpendicular to the axial direction Y-Y and incident thereto.

For example, a ball or roller bearing can be used. A sliding block or similar may also be used.

The nut 36 may be integrated in a ring of the bearing 44.

In other words, an embodiment is provided in which the inner ring of the bearing 44 constitutes the same nut. According to a possible embodiment, a slewing ring or outer ring of said bearing 44 is mounted by interference and / or co-molded on the main body 8.

According to a further possible embodiment, the nut 36 is directly in movement without interposed components, such as a bearing or bushing.

Said bearing 44 is constrained in the axial direction Y-Y, for example by means of a support flange integral with the motor and secured with screws to the main body 8.

The main body 8 is configured to provide a seat 48 suitable to house at least partially the first transmission end 24 of the control shaft 20 in a retraction movement of the control shaft 20 inside the main body 8.

For example, said seat 48 is obtained at least partially inside a toothed wheel or pulley 52 of the transmission means 16 driven by the motor means 12.

In this way, the control shaft 20 can slide axially along the axial direction Y-Y in both directions, in particular also in a retraction or insertion direction inside the main body 8, thanks to the coaxial relation between said control shaft and said toothed wheel or pulley 52.

As mentioned, the control shaft 20 is guided by a bearing 44, preferably but not necessarily having a dual effect, on the side of the first transmission end 24.

According to one embodiment, the movement of the control shaft 20 is also guided on the side of the second operating end 28, for example by interposing a bushing 56, counter-shaped with respect to said shaft, or directly with the main body 8, preferably made of low friction material.

In this way a more precise guiding of the control shaft 20 is obtained and it is also possible to distinguish the axial load support, entrusted to the bearing 44 placed on the side of the first transmission end 24, from the radial load support, entrusted to the bushing 56, so as to have an overall more precise guidance of the movement of the control shaft 20.

In particular, the greater precision is due to the distancing, along the axial direction Y-Y, of said supports 44,56.

The control shaft 20 is preferably provided with anti-rotation means 60 that prevent its rotation around said axial direction Y-Y. In fact, in the absence of said anti-rotation means 60, the control shaft thanks to the screw/nut coupling 32, would tend to rotate as well as to translate with respect to the axial direction Y-Y.

The anti-rotation means 60 may be of various types.

For example, the anti-rotation means 60 may comprise a plug 64 coupled with clearance with a groove 68 made on the control shaft 20.

Said groove 68 is sized to constitute the maximum drive stroke of the control shaft 20, namely the distance between opposite axial ends 70,72 of said groove 68 which act as mechanical end stops.

The anti-rotation means 60 may also comprise a non-axial-symmetrical portion, e.g. with a half-moon geometry, of the control shaft 20, associated with a corresponding counter-shaped stop, fixed relative to the control shaft 20.

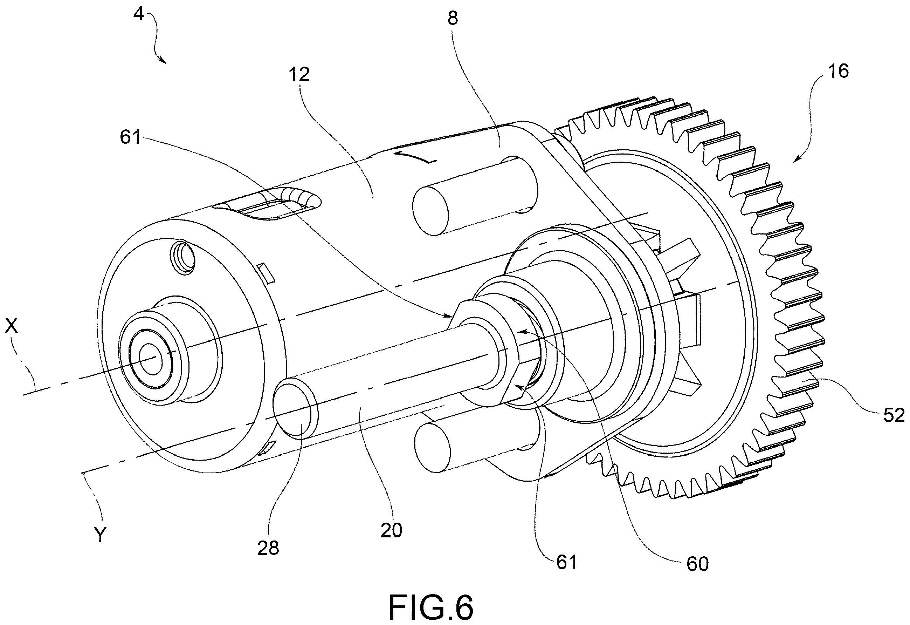

According to a possible embodiment (figure 6), the anti-rotation means 60 comprise a ring with a pair of square-cut surfaces 61, diametrically opposite each other.

According to a further possible embodiment, the anti-rotation means 60 comprise a hexagonal nut 62.

The end stops, which delimit the maximum stroke in extraction and retraction of the control shaft 20, can be obtained by mechanical stops made on parts fixed with respect to the control shaft 20.

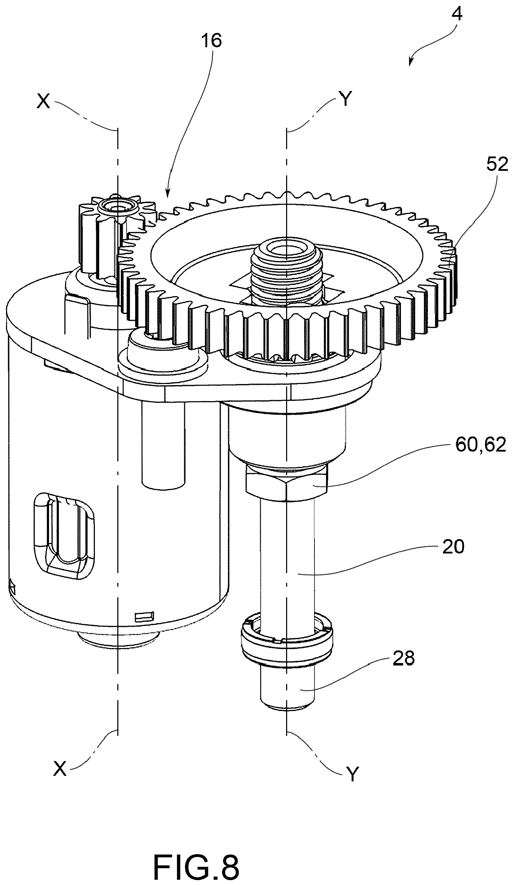

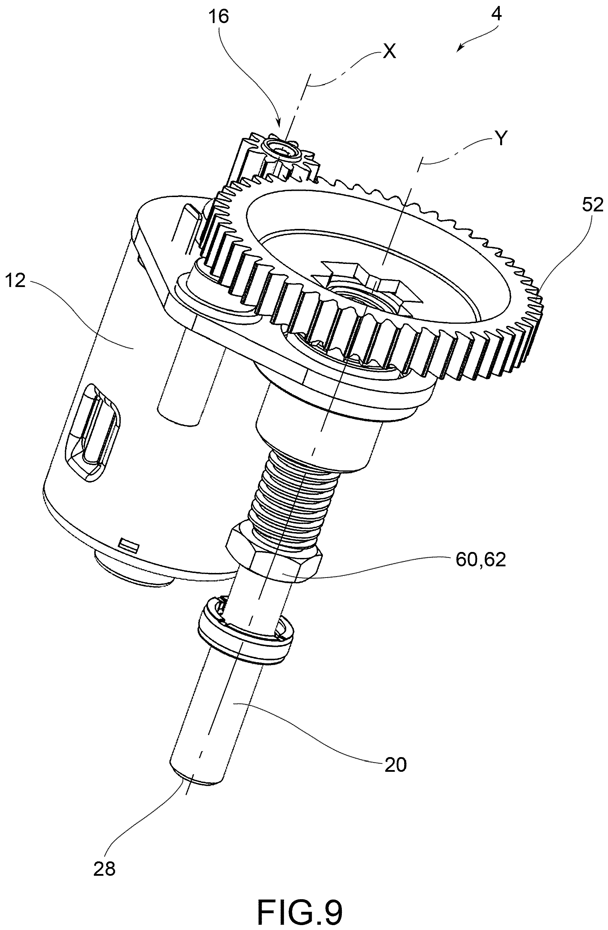

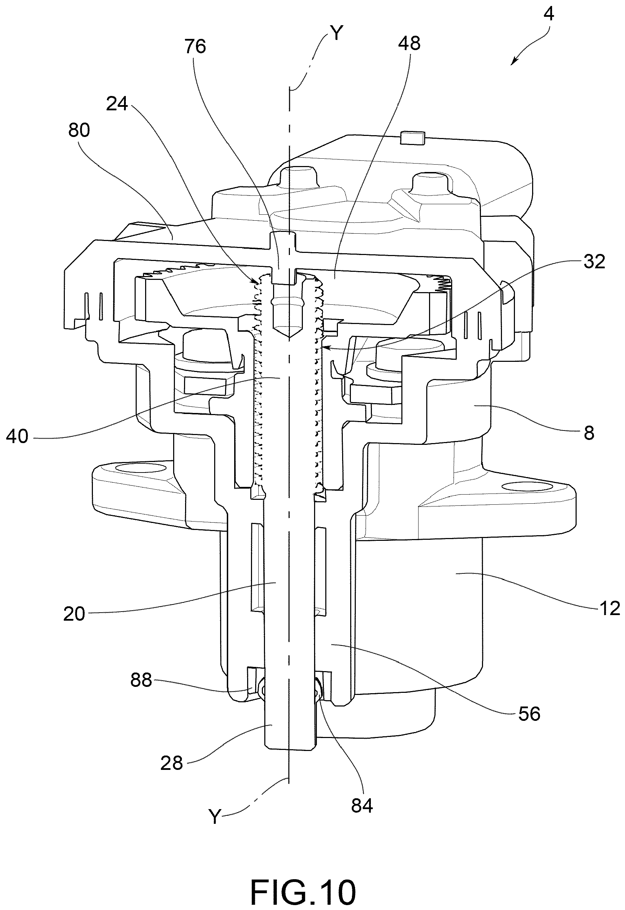

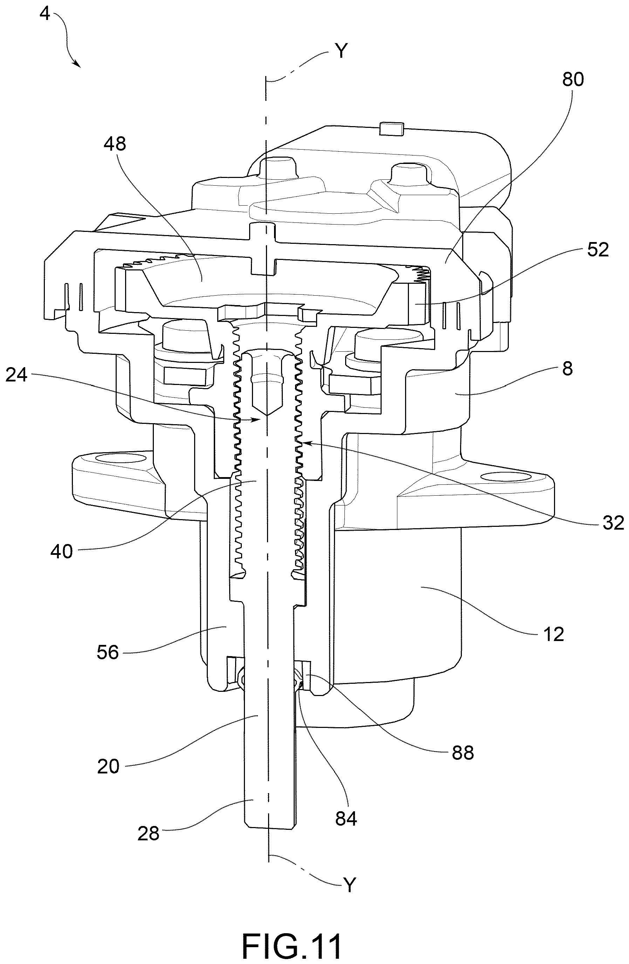

The end stop conditions of the control shaft are illustrated in figures 8-9 and 10-11.

It should be noted that the maximum extraction and retraction stroke need not necessarily be the same but may even be asymmetrical, depending on the specific needs of the user.

In order to control the operation of the control shaft 20, the actuator 4 may comprise an axial position sensor 76 of the control shaft 20.

For example, said axial position sensor 76 may be associated with a cover 80 of the main body 8, so as to be axially facing the first transmission end 24 of the control shaft 20.

In this way, the axial position sensor 76 measures the actual axial position of the control shaft 20, and thus the operating condition of the corresponding device driven by it, and does not make an estimate, as would be obtained for example by mounting a sensor on the motor means 12 or on the transmission means 16.

In addition, since the linear sensor is positioned on the output shaft, in the case of kinematic failure it is possible to read the correct position of the shaft, in compliance with automotive safety regulations.

Preferably, the axial position sensor 76 is co-moulded with the cover 80 of the main body 8.

The cover 80 is easily removable so as to allow quick access to the transmission means 16 for their maintenance or replacement, also to make customizations according to the user's requests. The cover 80 may accommodate or at least partially integrate the transmission means 16.

Associated with the main body 8 on the side opposite said cover 80, is a sliding gasket 84 influencing the second operating end 28 of the control shaft 20.

In particular said sliding gasket 84 slides on the second operating end 28 so as to prevent the entry of dirt inside the main body 8.

The sliding gasket 84 is preferably provided with a retaining ring 88, typically metal, to secure its position on the main body 8.

As may be appreciated from the description, the actuator according to the invention makes it possible to overcome the drawbacks of the prior art.

In fact, the linear actuator in question solves issues of compactness since the dimensions are reduced along the three axes and at the same time it allows high flexibility in the axial stroke since it is possible to vary the maximum stroke by customizing a few subcomponents, namely the control shaft, the transmission means and the cover of the main body.

It is also possible to have a double output with symmetrical or asymmetrical stroke distribution, depending on the user's needs.

The actuator ensures low reversibility for better controllability in both static and dynamic conditions, and can also be equipped with a position sensor on the final shaft.

The flexibility of the present solution is further increased by changing the screw pitch, which allows for multiple speed/force variations on the control shaft.

In addition, changing only the cover and control shaft produces a single output or double effect, servo or on-off solution.

This solution is also easily scalable.

The axial position sensor allows a direct calculation, and not an indirect measurement of the actual axial position of the control shaft; this way extremely precise control of the actuated device is possible.

The presence of two supports for the control shaft makes the actuator highly robust and resistant to peak loads and vibrations (all the more so in this layout since they are positioned on the same body; it is thus possible to ensure extremely precise reciprocal positioning).

Overall, the actuator according to the present invention appears to have compact dimensions, high precision and reliability, while maintaining a very low cost of realization.

In addition, the actuator is easily customizable according to the specific requirements/needs of the end user.

A person skilled in the art may make numerous modifications and variations to the actuators described above so as to satisfy contingent and specific requirements while remaining within the sphere of protection of the invention as defined by the following claims.

## Claims

1. Actuator (4) for automotive applications, comprising:
- a main body (8) housing motor means (12), transmission means (16), a control shaft (20), kinematically connected to said motor means (12) by means of said transmission means (16),
- wherein the control shaft (20) extends from a first transmission end (24), connected to the transmission means (16), to a second operating end (28) operatively connected to a user device,
- wherein the control shaft (20) is controlled in a reciprocating linear movement in an axial direction (Y-Y) by means of said transmission means (16) which transform a rotation movement along a drive axis (X-X) of the motor means (12) into a translation movement of the control shaft (20) along said axial direction (Y-Y),
- wherein the motor means (12) and the control shaft (20) are oriented so that the drive axis (X-X) and the axial direction (Y-Y) are perpendicular or parallel and spaced apart from each other.

2. Actuator (4) according to claim 1, wherein the transmission means (16) comprise a screw-nut type coupling (32), wherein the nut (36) is moved in rotation by the motor means (12) and the screw (40) is made or applied to the first transmission end (24) so as to be able to move the control shaft (20) relative to the nut (36) .

3. Actuator (4) according to claim 2, wherein the nut (36) is supported by a dual effect bearing (44) that provides support for axial loads, parallel to said axial direction (Y-Y) and radial loads, perpendicular to the axial direction (Y-Y) and incident thereto.

4. Actuator (4) according to claim 3, wherein the nut (36) is integrated in a ring of the bearing (44).

5. Actuator (4) according to claim 3 or 4, wherein the inner ring of the bearing (44) constitutes the same nut.

6. Actuator (4) according to any one of the claims from 3 to 5, wherein said bearing (44) is at least partially mounted by interference and/or co-moulded on the main body (8).

7. Actuator (4) according to any one of the claims from 3 to 6, wherein a slewing ring or external ring pf said bearing (44) is mounted by interference and / or co-molded on the main body (8).

8. Actuator (4) according to any one of claims 2 to 7, wherein the screw-nut type coupling (32) is of the reversible type.

9. Actuator (4) according to any one of claims 2 to 8, wherein said screw-nut type coupling (32) is provided with at least one elastic means (92) in order to overcome the frictions between the screw (40) and the nut screw (36) .

10. Actuator (4) according to claim 9, wherein said at least one elastic means (92) is arranged at the second operating end (28).

11. Actuator (4) according to any one of the preceding claims, wherein the main body (8) is configured to provide a seat (48) suitable to house at least partially the first transmission end (24) in a retraction movement of the control shaft (20) inside the main body (8).

12. Actuator (4) according to claim 11, wherein said seat (48) is obtained at least partially inside a toothed wheel or pulley (52) of the transmission means (16) driven by the motor means (12).

13. Actuator (4) according to any one of the preceding claims, wherein the control shaft (20), on the side of the second operating end (28), is supported by a bushing (56) counter-shaped to said control shaft (20).

14. Actuator (4) according to any one of the claims from 1 to 12, wherein the control shaft (20) is directly supported by the main body (8).

15. Actuator (4) according to any one of claims 1 to 14, wherein all the supports and / or bearings of the control shaft (20) are arranged on the same main body (8).

16. Actuator (4) according to any one of claims 1 to 15, wherein the control shaft (20) comprises two abutments made integral with one another, for example by welding, or by crimping and similar mechanical connection means

17. Actuator (4) according to any one of the preceding claims, wherein the control shaft (20) is equipped with anti-rotation means (60) that prevent it from rotating around said axial direction (Y-Y).

18. Actuator (4) according to claim 17, wherein said anti-rotation means (60) comprise a plug (64) coupled with clearance with a groove (68) made on the control shaft (20).

19. Actuator (4) according to claim 18, wherein said groove (68) is sized to constitute the maximum drive stroke of the control shaft (20), i.e. the distance between opposite axial ends (70,72) of said groove (68).

20. Actuator (4) according to any one of the claims from 17 to 19, wherein the anti-rotation means (60) comprise a portion of the drive shaft (20) with a non-axial symmetrical geometry associated with a counter-shaped stop, fixed with respect to the control shaft (20).

21. Actuator (4) according to any one of the preceding claims, wherein an axial position sensor (76) of the control shaft (20) is provided wherein said axial position sensor (76) is associated with a cover (80) of the main body (8) axially facing the first transmission end (24) of the control shaft (20).
